# FASCICULE DE BREVET EUROPEEN

(11) **EP 1 270 101 B1**
(45) Date de publication et mention de la délivrance du brevet: **22.11.2006**
(21) Numéro de dépôt: 02291517.7
(22) Date de dépôt: 18.06.2002
(51) Int. Cl.: B21C 37/29, B21D 26/02, B64D 15/04

(54) **Structure tubulaire mince cloisonnée et son procédé de fabrication**
Dünne und verteilte rohrförmige Struktur und Herstellungsverfahren
Thin webbed tubular structure and method for making the same

(30) Priorité: 20.06.2001 BE 200100419
(43) Date de publication de la demande: 02.01.2003
(73) Titulaire: Sonaca S.A., 6041 Gosselies (BE)
(72) Inventeur: Debaisieux, Stéphane, 7181 Feluy (BE); Gueuning, Dimitri, 1330 Rixensart (BE); Quets, Sébastien, 1460 Ittre (BE)
(74) Mandataire: Poulin, Gérard

(56) Documents cités:
- GB-A- 2 109 711
- US-A- 4 292 375
- US-A- 5 300 367
- US-A- 5 988 225

## Description

### Domaine technique

L'invention concerne une structure tubulaire mince cloisonnée destinée à assurer l'écoulement d'un fluide entre une partie tubulaire d'entrée et au moins une partie tubulaire de sortie orientées selon des directions différentes, généralement bien que non nécessairement perpendiculaires l'une à l'autre.

Dans l'expression "structure tubulaire mince cloisonnée", le terme "mince" signifie que la structure est formée uniquement de tôles d'épaisseur inférieure à 2 mm.

L'invention concerne également un procédé de fabrication d'une telle structure tubulaire mince cloisonnée.

L'invention trouve une application privilégiée dans l'industrie aéronautique, et notamment dans la réalisation de dispositifs de dégivrage par air chaud des surfaces extérieures des aéronefs, telles que les volets de bord d'attaque des voilures d'avion. Elle peut toutefois être utilisée dans tout autre domaine technique nécessitant un changement de direction d'un fluide en écoulement dans une canalisation.

### Etat de la technique

Sur les aéronefs, on utilise généralement de l'air chaud prélevé sur les moteurs de l'appareil pour dégivrer ou éviter l'apparition de givre sur les surfaces aérodynamiques les plus exposées, comme le bord d'attaque des ailes, les empennages et dérives, ainsi que les entrées d'air des réacteurs. L'air chaud est acheminé vers les surfaces à dégivrer par des canalisations connectées entre elles.

Le document US-A-4 752 049 montre une aile d'avion équipée de volets de bord d'attaque à l'intérieur desquels un circuit de dégivrage est déployé. Ce circuit comprend notamment une canalisation tubulaire qui suit le bord d'attaque des volets, un tronçon de canalisation télescopique qui reçoit l'air en provenance du réacteur et un coude qui relie ce tronçon à la canalisation tubulaire. L'air acheminé dans la canalisation tubulaire sort par des orifices ménagés à sa périphérie, afin d'être diffusé dans une chambre de dégivrage située à l'intérieur du bord d'attaque du volet.

Le document US-A-5 807 454 décrit un dispositif similaire, utilisé pour dégivrer le bord d'attaque d'une aile.

Le document US-A-4 603 824 montre un dispositif de dégivrage d'un volet de bord d'attaque, dans lequel une canalisation d'alimentation en air est reliée à une première extrémité d'une canalisation télescopique par un premier té de raccordement, la deuxième extrémité de la canalisation télescopique étant reliée à une canalisation de bord d'attaque par un deuxième té de raccordement. Dans ce dispositif, la canalisation télescopique permet tous les déplacements du volet sans interruption de l'alimentation en air. Chaque té est supporté par deux nervures qui permettent une liaison rigide avec la canalisation de bord d'attaque tout en assurant une rotation du conduit télescopique autour de la canalisation d'alimentation recevant l'air chaud du réacteur.

Lors de la réalisation de tels circuits de dégivrage pour volets et voilures d'aéronefs, on utilise de préférence des canalisations légères et d'encombrement limité, afin de limiter le poids. Toutefois, des déformations permanentes ou des fissures peuvent se produire dans les canalisations dégivrant les bords d'attaque. Plus précisément, ces détériorations apparaissent dans les jonctions des différents tronçons de ces canalisations. Ces problèmes peuvent être résolus en augmentant les épaisseurs afin d'accroître la rigidité. Toutefois, cela conduit à augmenter le poids, ce qui est contraire à l'objectif visé en aéronautique.

Des essais ont permis de montrer que les détériorations des canalisations de dégivrage sont essentiellement dues à des vibrations provoquées par l'écoulement de l'air chaud dans celles-ci. Ainsi, on a constaté que l'air chaud sort des coudes ou des tés avec un écoulement tourbillonnaire, dont le profil des vitesses est aléatoire. Cet écoulement tourbillonnaire produit des contraintes alternées dans la paroi de la canalisation de dégivrage, ce qui peut conduire à des criques de fatigue extrêmement préjudiciables à la sécurité et à la durée de vie des éléments composant le circuit de dégivrage.

Pour remédier aux effets de l'écoulement tourbillonnaire sans trop pénaliser le poids ou la résistance de la structure tubulaire, il est connu de placer, à l'intérieur des parties de sortie des coudes ou des tés, des plaques simples ou croisées, disposées selon le diamètre de sortie du coude ou du té et formant entre elles des angles de préférence droits. Ces plaques ont pour fonction d'uniformiser l'écoulement et de réduire l'intensité des tourbillons à l'entrée de la canalisation de dégivrage. Elles assurent la création d'un écoulement plus stable dans le sens longitudinal de la canalisation.

L'utilisation de telles plaques présente toutefois un inconvénient du point de vue de la fabrication. En effet, les plaques sont fixées sur les contours circulaires du coude ou du té par des points de soudure. Une telle opération exige l'utilisation d'un outillage pour positionner et assembler les différentes pièces, afin d'éviter les déformations inhérentes au soudage de pièces minces. Des reprises sont souvent nécessaires pour remettre les pièces aux dimensions désirées, ce qui est particulièrement pénalisant pour les temps de fabrication.

Un autre inconvénient concerne la fabrication des structures minces coudées ou en forme de té, qui fait appel à des techniques connues de l'homme du métier, dont la mise en oeuvre est longue et onéreuse.

Ainsi, il est connu de former, par emboutissage ou déformation superplastique, deux demi coquilles que l'on assemble ensuite par une opération de soudage par fusion. Cependant, cette technique demande autant d'outillages qu'il existe de pièces à réaliser et un outillage pour détourer les pièces et les assembler.

Il est également connu de réaliser une structure en té par piquage d'un tube sur l'autre et soudage desdits tubes selon leur ligne d'intersection. Cette technique présente les mêmes inconvénients que la précédente. De plus, elle impose l'utilisation d'un outillage élaboré pour positionner les tubes avant leur assemblage et pour les maintenir durant la phase de soudage.

Le document US-A-5 988 225 décrit une autre technique de fabrication d'une structure tubulaire en forme de té, par déformation superplastique d'un tube. Selon cette technique, on ferme de façon étanche les extrémités d'une ébauche tubulaire au moyen de disques présentant un coefficient de dilatation supérieur à celui de la pièce à réaliser, puis on place l'ébauche dans un moule. Après chauffage et injection d'un gaz à l'une des extrémités de l'ébauche, le tube se déforme pour venir épouser le contour intérieur du moule et donner ainsi naissance à une structure tubulaire en forme de té.

Par rapport aux autres procédés de fabrication connus, cette dernière technique présente l'avantage de diminuer le temps de fabrication. Toutefois, celui-ci reste tributaire des contraintes liées à la mise en place des plaques ou cloisons canalisant l'écoulement dans les parties de sortie du té. Elle ne résout donc pas de manière satisfaisante le problème découlant de la création d'un écoulement turbulent aux sorties du coude ou du té.

### Exposé de l'invention

L'invention a précisément pour objet une structure tubulaire mince cloisonnée dont la conception originale lui permet de réduire fortement les écoulements turbulents, sans accroître le poids et tout en autorisant un temps de fabrication sensiblement plus faible que lorsqu'on utilise les techniques de fabrication existantes.

Conformément à l'invention, ce résultat est obtenu au moyen d'une structure tubulaire mince cloisonnée apte à assurer l'écoulement d'un fluide entre une partie tubulaire d'entrée et au moins une partie tubulaire de sortie orientées selon des directions différentes, ladite structure comportant une paroi extérieure et étant caractérisée en ce qu'elle comprend de plus des cloisons intérieures continues réalisées d'un seul tenant avec la paroi extérieure, de façon à délimiter entre la partie tubulaire d'entrée et chaque partie tubulaire de sortie au moins un passage continu indépendant de guidage du fluide.

La présence d'un passage continu pour guider le fluide entre l'entrée et la sortie permet de réduire très fortement les turbulences à la sortie de ladite structure. On supprime ainsi les risques de détérioration de la canalisation de dégivrage.

Selon un mode de réalisation préféré de l'invention, chaque cloison intérieure continue comprend deux portions terminales planes, placées dans les parties tubulaires d'entrée et de sortie, et une portion intérieure courbe, en forme de tronc de cône, reliant sans discontinuité les deux portions terminales planes.

De préférence, la structure tubulaire est formée de tôles présentant une épaisseur au plus égale à environ 2 mm. La portion intérieure courbe de chaque cloison intérieure continue coupe alors un plan médian de la structure tubulaire selon un premier arc de cercle de rayon R et la paroi extérieure selon un deuxième arc de cercle de rayon r, de telle sorte que le rayon R du premier arc de cercle est sensiblement égal à trois fois le rayon r du deuxième arc de cercle.

Dans ce cas, le rayon r du deuxième arc de cercle est, de préférence, sensiblement égal à 15 fois l'épaisseur desdites tôles.

Avantageusement, lorsque la structure est en forme de té et comprend deux parties tubulaires de sortie alignées et orientées sensiblement à angle droit par rapport à la partie tubulaire d'entrée, le passage continu indépendant reliant la partie tubulaire d'entrée à chaque partie tubulaire de sortie est délimité entre la paroi extérieure et deux cloisons intérieures continues.

Dans ce cas, de préférence, une cloison intérieure supplémentaire est placée à l'intérieur de la structure, selon un plan médian de celle-ci, entre la paroi extérieure de la structure et des zones de jonction desdites cloisons intérieures continues.

Chacun des passages continus indépendants présente alors, entre la partie tubulaire d'entrée et chaque partie tubulaire de sortie, soit une section de passage sensiblement constante, soit une section de passage qui diminue ou augmente progressivement de façon à accélérer ou à décélérer le fluide, selon le cas.

L'invention a aussi pour objet un procédé de fabrication d'une structure tubulaire mince cloisonnée telle que définie ci-dessus, dans lequel la paroi extérieure et les cloisons intérieures continues sont obtenues en une seule opération par soudage par diffusion et par formage superplastique, à partir de tôles en alliage de titane.

### Brève description des dessins

On décrira à présent, à titre d'exemple non limitatif, un mode de réalisation préféré de l'invention, en se référant aux dessins annexés, dans lesquels :
- la figure 1 est une vue en perspective éclatée qui représente une structure tubulaire mince cloisonnée, en forme de té, selon un mode de réalisation préféré de l'invention ;
- la figure 2 est une vue en perspective comparable à la figure 1, illustrant une variante de réalisation ;
- la figure 3 est une vue en perspective illustrant schématiquement une première étape de fabrication de la structure tubulaire mince cloisonnée de la figure 1 ; et
- la figure 4 est une vue en perspective illustrant schématiquement une deuxième étape de fabrication de la structure tubulaire mince cloisonnée de la figure 1.

### Description détaillée d'un mode de réalisation préféré de l'invention

Dans le mode de réalisation illustré sur les figures, la structure tubulaire mince cloisonnée conforme à l'invention est une structure en forme de té qui comprend une paroi extérieure 14. La paroi extérieure 14 de la structure tubulaire mince cloisonnée selon l'invention est formée d'une tôle mince, de préférence en alliage de titane.

La structure tubulaire mince cloisonnée comporte une partie tubulaire d'entrée 10 et deux parties tubulaires de sortie 12. Plus précisément, dans les parties tubulaires d'entrée 10 et de sortie 12, la paroi extérieure 14 présente une section circulaire et sensiblement de même diamètre. En outre, les parties tubulaires de sortie 12 sont centrées sur un axe 18 commun, orienté selon une direction sensiblement normale à l'axe 20 de la partie tubulaire d'entrée 10.

Il est important d'observer que ces caractéristiques ne doivent en aucun cas être considérées comme limitant la portée de l'invention. En particulier, celle-ci concerne également une structure tubulaire mince cloisonnée en forme de coude ne comportant qu'une seule partie tubulaire de sortie, une structure tubulaire cloisonnée dans laquelle les parois extérieures des parties tubulaires d'entrée et de sortie ont des sections non circulaires (par exemple, ovales) et/ou différentes, et une structure tubulaire mince cloisonnée dans laquelle les axes des parties tubulaires d'entrée et de sortie sont orientés selon des directions différentes, mais non orthogonales l'une à l'autre.

Conformément à l'invention, la structure tubulaire mince cloisonnée comprend, de plus, des cloisons intérieures continues 22, réalisées d'un seul tenant avec la paroi extérieure 14. Les cloisons intérieures continues 22 s'étendent sans interruption de la partie tubulaire d'entrée 10 jusqu'à chaque partie tubulaire de sortie 12, en délimitant un passage continu indépendant 24 entre la partie tubulaire d'entrée 10 et chaque partie tubulaire de sortie 12.

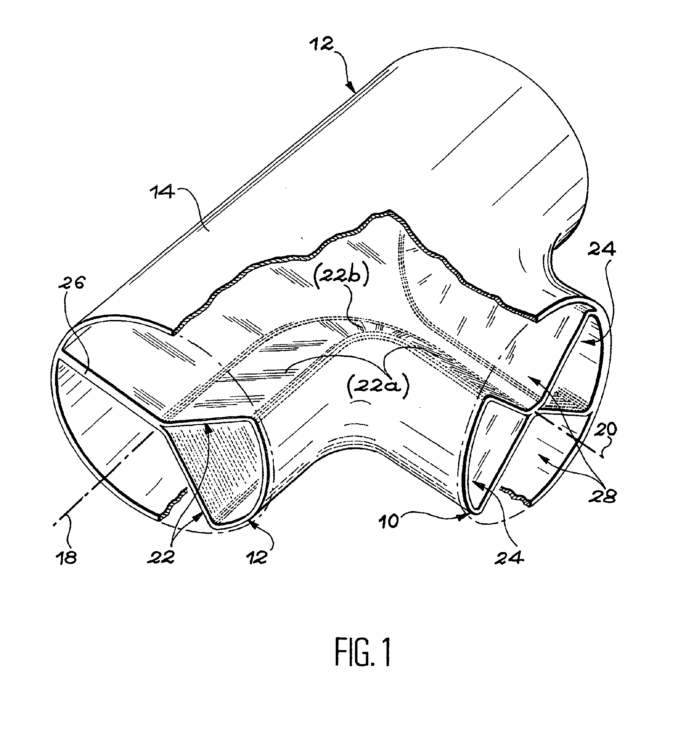

Ainsi, dans le mode de réalisation représenté sur la figure 1 où la structure tubulaire est en forme de té, les cloisons intérieures continues 22 délimitent deux passages continus indépendants 24 reliant respectivement la partie tubulaire d'entrée 10 à chacune des parties tubulaires de sortie 12. Comme la paroi extérieure 14, les cloisons intérieures continues 22 sont réalisées en tôles minces, de préférence en alliage de titane.

Dans le mode de réalisation illustré sur la figure 1, chaque cloison intérieure continue 22 comprend deux portions terminales planes 22a et une portion intermédiaire courbe 22b, en forme de tronc de cône, reliant sans discontinuité, c'est-à-dire de façon tangentielle, les deux portions terminales planes 22a.

Les deux portions terminales planes 22a de chacune des cloisons 22 sont orientées sensiblement radialement à l'intérieur des parties tubulaires d'entrée 10 et de sortie 12, de façon symétrique par rapport à un plan médian de la structure tubulaire, ledit plan médian passant par les axes 18 et 20.

La portion intermédiaire courbe 22b coupe le plan médian précité selon un arc de cercle de rayon R et la paroi extérieure 14 selon un arc de cercle de rayon r. Les valeurs qui sont données préférentiellement à ces rayons R et r seront précisées ultérieurement.

Plus précisément, chacun des passages continus indépendants 24 est délimité, d'une part, par deux cloisons intérieures continues 22 et, d'autre part, par une portion, de section en arc de cercle, de la paroi extérieure de la structure tubulaire. Chacun des passages 24 présente ainsi une section en forme de secteur circulaire.

Les deux cloisons intérieures continues 22 délimitant chacun des passages 24 sont disposées symétriquement de part et d'autre du plan médian de la structure tubulaire, de façon à former entre elles un angle donné. Cet angle peut être sensiblement constant d'une extrémité à l'autre du passage 24 ou, au contraire, évolutif, de même que la position de la ligne de jonction des cloisons 22 par rapport à l'axe 18, à la sortie de la structure tubulaire.

Ainsi, l'angle formé entre les cloisons intérieures continues 22 peut diminuer ou augmenter en allant de la partie tubulaire d'entrée 10 vers la partie tubulaire de sortie 12. Parallèlement, la ligne de jonction des cloisons 22 peut aussi s'éloigner de l'axe 18 des parties tubulaires de sortie 12. De cette manière, on donne à la section des passages 24 une valeur qui va en diminuant ou, au contraire, en augmentant de l'extrémité d'entrée vers l'extrémité de sortie. On imprime ainsi une accélération ou une décélération au fluide qui s'écoule à l'intérieur du passage 24. Dans le mode de réalisation illustré schématiquement sur la figure 1, l'angle formé entre les cloisons intérieures continues 22 délimitant chaque passage 24 est, par exemple, d'environ 90°.

L'air chaud admis à l'entrée de chacun des passages 24 voit sa trajectoire progressivement modifiée jusqu'à la sortie dudit passage par des portions intermédiaires courbes, en forme de tronc de cône, des cloisons 22. Le caractère continu et progressif du changement de direction ainsi imposé à l'air qui circule dans les passages 24 a pour conséquence d'éviter la formation de turbulences à la sortie de la structure. On évite ainsi l'apparition de vibrations importantes susceptibles de provoquer des criques.

Dans le mode de réalisation représenté sur la figure 1, la structure tubulaire mince cloisonnée comprend de plus une cloison intérieure supplémentaire 26. Cette cloison supplémentaire 26 est disposée dans le plan médian de la structure, de façon à relier sans discontinuité la paroi extérieure de ladite structure à la zone de jonction des cloisons intérieures continues 22, à l'extérieur des passages 24. On délimite ainsi, de part et d'autre de la cloison supplémentaire 26, deux autres passages 28 par lesquels la partie tubulaire d'entrée 10 communique simultanément avec chacune des parties tubulaires de sortie 12.

L'air chaud admis à l'entrée de chacun des passages 28 se divise donc en deux en entrant en contact avec la paroi extérieure de la structure, en face de la partie tubulaire d'entrée 10. Toutefois, du fait de la présence des passages continus 22, seule environ la moitié du fluide vient heurter ladite paroi extérieure. Le coup de bélier qui en résulte, générateur de vibrations, est donc très réduit par rapport aux structures existantes, dans lesquelles la totalité du fluide heurte ladite paroi. De plus, le fluide sortant des passages 28 est entraîné et régulé par le fluide sortant des passages continus 24, de sorte que le fluide s'écoule pratiquement sans turbulence à la sortie de la structure.

Cet effet peut être amplifié, si nécessaire, en donnant aux passages continus 24 des sections d'entrée supérieures à celles des passages 28. Dans ce cas, il est avantageux d'augmenter également la section des passages continus 24 en aval de leur entrée, afin d'acheminer jusqu'à la sortie une quantité de fluide guidé plus importante.

Il est à noter que l'effet de stabilisation de l'écoulement issu des passages 28 par l'écoulement issu des passages continus 24 est encore augmenté lorsque l'on donne à ces derniers une section qui diminue progressivement de l'entrée vers la sortie. En effet, cet agencement a pour effet d'augmenter la vitesse du fluide à la sortie des passages 24 et, par conséquent, l'énergie cinétique qui permet d'entraîner et de réguler les écoulements turbulents issus des passages 28. Toutefois, il est souhaitable de limiter les différences de vitesse entre les sorties des passages 24 et 28, pour ne pas générer de turbulences. A cet effet, on ajuste les rapports des sections d'entrée et de sortie des passages 24 et 28 de façon à équilibrer au mieux les vitesses à la sortie de la structure tubulaire.

Les cloisons intérieures continues 22 forment en section, dans la partie tubulaire d'entrée 10, un X ou une croix à quatre branches. On divise ainsi en quatre parties le débit de l'air admis à l'entrée de la structure. Dans chacune des parties tubulaires de sortie, les deux cloisons 22 délimitant le passage 24 qui y débouche forment en section, avec la cloison supplémentaire 26, un Y ou une croix à trois branches.

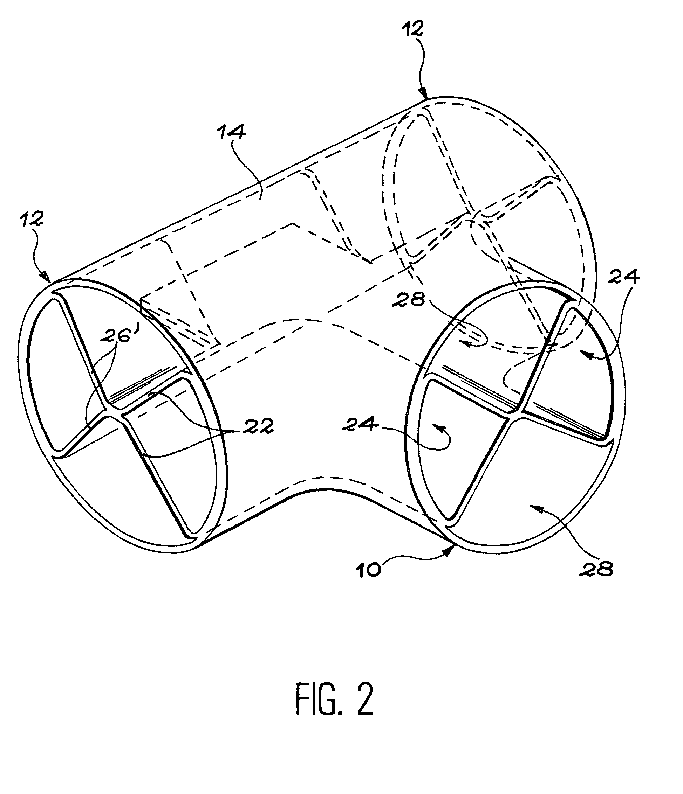

Dans une variante de réalisation de l'invention illustrée sur la figure 2, la cloison supplémentaire 26 est remplacée par deux paires de cloisons intérieures continues 26' qui relient les zones de jonction des cloisons intérieures continues 22 à la paroi extérieure 14 de la structure, de façon à re-canaliser, à chacune des sorties de la structure tubulaire, le fluide admis à l'entrée de chacun des passages 28. Les cloisons 26' sont disposées symétriquement par rapport au plan médian de la structure. Elles forment un X en section avec les cloisons 22, dans les parties tubulaires de sortie 12 de la structure.

Cet agencement permet de guider jusqu'à la sortie la totalité du fluide admis dans la structure. On assure ainsi une stabilité encore accrue de l'écoulement.

Dans cette dernière variante comme dans le mode de réalisation décrit auparavant, les angles formés entre les différentes cloisons 22 et 26' peuvent être constant ou évolutifs entre l'entrée et la sortie de la structure, de façon à donner à celles-ci les propriétés désirées.

Pour des raisons liées au procédé de fabrication de la structure tubulaire cloisonnée selon l'invention, la cloison supplémentaire 26 ainsi que les portions de la paroi extérieure 14 délimitant les passages 24 présentent une épaisseur sensiblement double de celle des cloisons intérieures continues 22 et des autres portions de la paroi extérieure 14 de la structure.

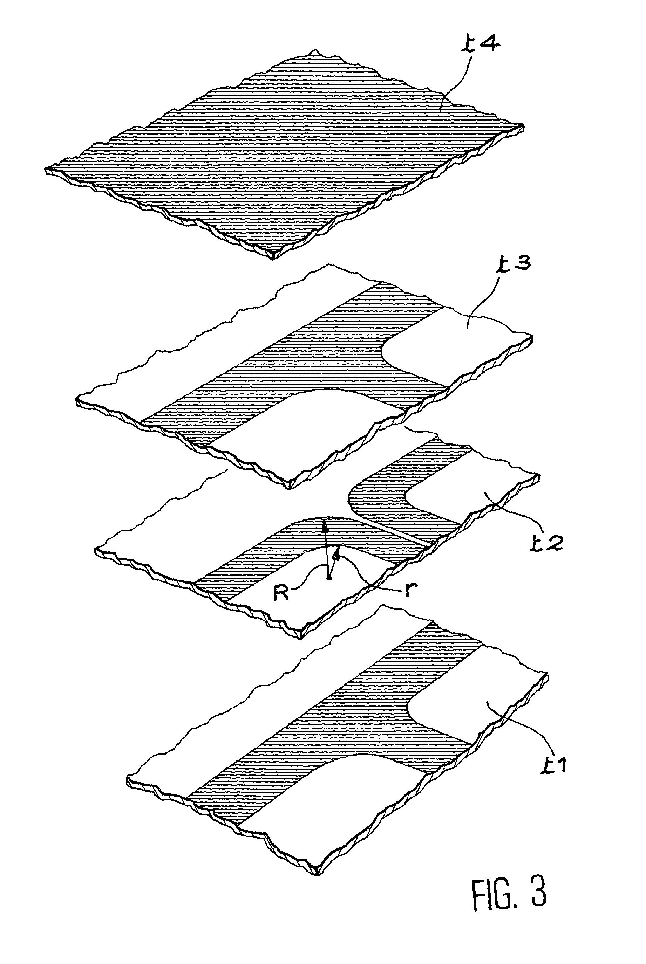

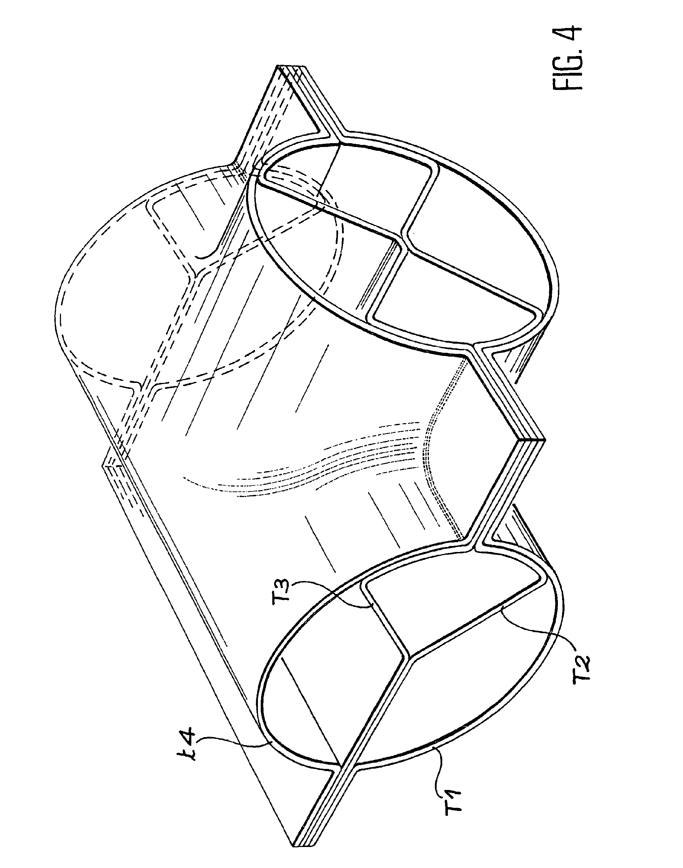

Dans le mode de réalisation préféré de l'invention illustré sur les figures 3 et 4, la structure tubulaire cloisonnée est fabriquée par la technique du soudage par diffusion et du formage superplastique.

Selon ce procédé et comme l'illustre la figure 3, on réalise tout d'abord un empilement de quatre tôles rectangulaires t1, t2, t3, et t4 en alliage de titane.

De façon plus précise, les tôles t1 et t4 placées à l'extérieur de l'empilement sont destinées à former la paroi extérieure 14 de la structure à fabriquer, alors que les tôles t2 et t3 placées à l'intérieur de l'empilement sont destinées à former les cloisons 22 et 26. Ainsi, chacune des tôles t2 et t3 forme l'une des cloisons 22 délimitant chacun des passages 24 et les deux tôles t2 et t3 sont soudées entre elles pour former la cloison supplémentaire 26. De plus, la tôle t2 est soudée localement à la tôle t1 et la tôle t3 est soudée localement à la tôle t4, de façon à former les parties de la paroi extérieure 14 de la structure qui délimitent les passages 24.

Préalablement à la mise en oeuvre du procédé de fabrication, les tôles t1 à t4 subissent un certain nombre d'opérations préparatoires, connues de l'homme du métier. Ces opérations comportent notamment le détourage des tôles, un dégraissage alcalin suivi d'un décapage fluo-nitrique et la délimitation des zones de soudage. Cette délimitation est réalisée en déposant des masques sur les faces en regard des tôles t1 à t4, en gravant ces masques dans les zones à ne pas souder et en revêtant les zones ainsi démasquées d'un matériau anti-diffusant tel que du nitrure de bore. Sur la figure 3, les zones revêtues d'agent anti-diffusant sont illustrées par des hachures.

Une caractéristique importante du procédé est la mise en place de l'agent anti-diffusant sur les tôles t2 et t3 qui assurent la formation des cloisons internes 22 et 26 de la structure. La formation des portions intermédiaires en forme de tronc de cône de chacune des cloisons 22 impose une déformation de la tôle t2 ou t3 correspondante selon trois directions de l'espace. Cette déformation est obtenue sans formation de crique ni déchirure des tôles, en déposant l'agent anti-diffusant sur une zone délimitée vers l'intérieur des tôles t2 et t3 par un arc de cercle de rayon R optimisé, servant de ligne de départ au déploiement de la cloison 22.

Pour des tôles t2 et t3 présentant une épaisseur initiale constante e, au plus égale à environ 1 mm, le rayon R est sensiblement égal à trois fois le rayon r de l'arc de cercle qui délimite la zone d'agent anti-diffusant vers l'extérieur des tôles t2 et t3.

Dans un mode de réalisation préféré, le rayon r est sensiblement égal à 15 fois l'épaisseur e, afin d'obtenir une structure tubulaire cloisonnée dont le diamètre extérieur est égal à 60 fois l'épaisseur e. Cette valeur est particulièrement adaptée au cas des canalisations qui équipent les aéronefs.

Les tôles t1 à t4 ainsi préparées et empilées sont ensuite placées dans un moule. On applique alors sur l'empilement une pression de 12 bars pendant 5 heures, de façon à assurer le soudage des tôles par diffusion, en dehors des zones revêtues d'agent anti-diffusant.

Le cycle de formage superplastique est ensuite mis en oeuvre de façon classique, pour assurer le "gonflage" de la structure par injection d'un gaz sous pression entre les tôles. La pression appliquée sur les faces internes des tôles doit atteindre au moins 30 bars pour la phase de conformage. Cette étape est illustrée schématiquement sur la figure 4.

Enfin, les parties des tôles situées dans le plan médian à l'extérieur de la structure sont découpées et le bord correspondant est meulé pour donner à la structure sa forme définitive.

On réalise ainsi en une seule opération et sans formation de crique une structure tubulaire cloisonnée permettant de dévier la trajectoire d'un fluide en écoulement sans créer de turbulences en sortie.

## Revendications

1. Structure tubulaire mince cloisonnée apte à assurer l'écoulement d'un fluide entre une partie tubulaire d'entrée (10) et au moins une partie tubulaire de sortie (12) orientées selon des directions différentes, ladite structure comportant une paroi extérieure (14) et étant **caractérisée en ce qu**'elle comprend de plus des cloisons intérieures continues (22) réalisées d'un seul tenant avec la paroi extérieure, de façon à délimiter entre la partie tubulaire d'entrée (10) et chaque partie tubulaire de sortie (12) au moins un passage continu indépendant (24) de guidage du fluide.

2. Structure tubulaire mince cloisonnée selon la revendication 1, dans laquelle chaque cloison intérieure continue (22) comprend deux portions terminales planes (22a), placées dans les parties tubulaires d'entrée (10) et de sortie (12), et une portion intérieure courbe (22b), en forme de tronc de cône, reliant sans discontinuité les deux portions terminales planes (22a).

3. Structure tubulaire mince cloisonnée selon la revendication 2, formée de tôles (t1 à t4) présentant une épaisseur au plus égale à environ 2 mm, dans lequel la portion intérieure courbe (22b) de chaque cloison intérieure continue (22) coupe un plan médian de la structure tubulaire selon un premier arc de cercle de rayon R et la paroi extérieure (14) selon un deuxième arc de cercle de rayon r, de telle sorte que le rayon R du premier arc de cercle est sensiblement égal à trois fois le rayon r du deuxième arc de cercle.

4. Structure tubulaire mince cloisonnée selon la revendication 3, dans laquelle le rayon r du deuxième arc de cercle est sensiblement égal à 15 fois l'épaisseur desdites tôles (t1 à t4).

5. Structure tubulaire mince cloisonnée selon l'une quelconque des revendications 2 à 4, comprenant deux parties tubulaires de sortie (12) alignées et orientées sensiblement à angle droit par rapport à la partie tubulaire d'entrée (10), dans laquelle le passage continu indépendant (24) reliant la partie tubulaire d'entrée (10) à chaque partie tubulaire de sortie (12) est délimité entre la paroi extérieure (14) et deux cloisons intérieures continues (22).

6. Structure tubulaire mince cloisonnée selon la revendication 5, dans laquelle une cloison intérieure supplémentaire (26) est placée à l'intérieur de la structure, selon un plan médian de celle-ci, entre la paroi extérieure (14) de la structure et des zones de jonction desdites cloisons intérieures continues (22).

7. Structure tubulaire mince cloisonnée selon la revendication 5, dans laquelle deux autres paires de cloisons intérieures (26') relient des zones de jonction des cloisons intérieures continues (22) à la paroi extérieure de la structure, de façon à re-canaliser en sortie le fluide entré par d'autres passages (28) à l'intérieur de ladite paroi extérieure.

8. Structure tubulaire mince cloisonnée selon l'une quelconque des revendications précédentes, dans laquelle chacun des passages continus indépendants (24) présente une section de passage sensiblement constante entre la partie tubulaire d'entrée (10) et chaque partie tubulaire de sortie (12).

9. Structure tubulaire mince cloisonnée selon l'une quelconque des revendications 5 à 7, dans laquelle chacun des passages continus indépendants (24) présente une section de passage qui diminue progressivement entre la partie tubulaire d'entrée (10) et chaque partie tubulaire de sortie (12).

10. Structure tubulaire mince cloisonnée selon l'une quelconque des revendications 5 à 7, dans laquelle chacun des passages continus indépendants (24) présente une section de passage qui augmente progressivement entre la partie tubulaire d'entrée (10) et chaque partie tubulaire de sortie (12).

11. Procédé de fabrication d'une structure tubulaire mince cloisonnée selon l'une quelconque des revendications précédentes, dans lequel la paroi extérieure (14) et les cloisons intérieures continues (22) sont obtenues en une seule opération par soudage par diffusion et par formage superplastique, à partir de tôles (t1 à t4) en alliage de titane.

## Claims

1. Thin walled compartmented tubular structure enabling a fluid to flow between an inlet tubular part (10) and at least one outlet tubular part (12) oriented in different directions, the said structure including an external wall (14) and being **characterised in that** it additionally includes continuous internal walls (22) produced in one piece with the external wall, such as to materialise between the inlet tubular part (10) and each outlet tubular part (12) at least one independent continuous passage (24) to guide the fluid.

2. Thin walled compartmented tubular structure in accordance with claim 1, in which each continuous internal wall (22) includes two planar end portions (22a), located in the inlet tubular part (10) and outlet tubular part (12), and an internal curved portion (22b), in the shape of the fulcrum of a cone, connecting together the two planar end portions (22a) without any discontinuity.

3. Thin walled compartmented tubular structure in accordance with claim 2, formed of sheets (t1 to t4) of thickness equal to about 2 mm at the most, in which the internal curved portion (22b) of each continuous internal wall (22) intercepts a median plane of the tubular structure along a first circular arc of radius R and the external wall (14) along a second circular arc of radius r, such that the radius R of the first circular arc is approximately equal to three times radius r of the second circular arc.

4. Thin walled compartmented tubular structure in accordance with claim 3, in which radius r of the second circular arc is approximately equal to 15 times the thickness of the said sheets (t1 to t4).

5. Thin walled compartmented tubular structure in accordance with any of claims 2 to 4, including two outlet tubular parts (12) aligned and oriented approximately at right angles to the inlet tubular part (10), in which the independent continuous passage (24) connecting the inlet tubular part (10) to each outlet tubular part (12) is materialised between the external wall (14) and two continuous internal walls (22).

6. Thin walled compartmented tubular structure in accordance with claim 5, in which an additional internal wall (26) is located inside the structure, in a median plane of the latter, between the external wall (14) of the structure and the joint zones of the said continuous internal walls (22).

7. Thin walled compartmented tubular structure in accordance with claim 5, in which two other pairs of internal walls (26') connect the joint zones of the continuous internal walls (22) to the external wall of the structure, such as to re-direct to the outlet the fluid entering via other passages (28) inside the said external wall.

8. Thin walled compartmented tubular structure in accordance with any of the previous claims, in which each of the independent continuous passages (24) exhibits an approximately constant passage cross-section between the inlet tubular part (10) and each outlet tubular part (12).

9. Thin walled compartmented tubular structure in accordance with any of claims 5 to 7, in which each of the independent continuous passages (24) exhibits a passage cross-section which reduces gradually between the inlet tubular part (10) and each outlet tubular part (12).

10. Thin walled compartmented tubular structure in accordance with any of claims 5 to 7, in which each of the independent continuous passages (24) exhibits a passage cross-section which increases gradually between the inlet tubular part (10) and each outlet tubular part (12).

11. Manufacturing process for a thin walled compartmented tubular structure in accordance with any of the previous claims, in which the external wall (14) and the internal continuous walls (22) are obtained in a single operation by diffusion welding and superplastic forming, from titanium alloy sheets (t1 to t4).

## Patentansprüche

1. Rohrförmige, schmale, umschlossene Struktur, die den Durchfluss eines Fluids zwischen einem rohrförmigen Eingangsabschnitt (10) und mindestens einem rohrförmigen Ausgangsabschnitt (12) bewerkstelligt, die in unterschiedlichen Richtungen ausgerichtet sind, wobei die Struktur eine Außenwand (14) aufweist und **dadurch gekennzeichnet ist, dass** sie außerdem kontinuierliche Innenwände (22) umfasst, die einstückig mit der Außenwand hergestellt sind, und zwar so, dass sie zwischen dem rohrförmigen Eingangsabschnitt (10) und jedem rohrförmigen Ausgangsabschnitt (12) mindestens einen unabhängigen kontinuierlichen Durchgang (24) zum Leiten des Fluids umgrenzen bzw. festlegen.

2. Rohrförmige, schmale, umschlossene Struktur nach Anspruch 1, wobei jede innere kontinuierliche Wand (22) zwei plane Endabschnitte (22a) umfasst, die in den rohrförmigen Eingangs- (10) und Ausgangsabschnitten (12) angeordnet sind, sowie einen inneren gekrümmten Abschnitt (22b) in Kegelstumpfform, der ohne Unterbrechung die beiden planen Endabschnitte (22a) verbindet.

3. Rohrförmige, schmale, umschlossene Struktur nach Anspruch 2, die aus Blechen (t1-t4) geformt ist, die eine Dicke von höchstens etwa 2 mm aufweisen, wobei der innere gekrümmte Abschnitt (22b) jeder kontinuierlichen Innenwand (22) eine Mittenebene der rohrförmigen Struktur entlang einem ersten Kreisbogen des Radius R und die Außenwand (14) entlang einem zweiten Kreisbogen des Radius r schneidet, so dass der Radius R des ersten Kreisbogens im wesentlichen gleich dem Dreifachen des Radius r des zweiten Kreisbogens ist.

4. Rohrförmige, schmale, umschlossene Struktur nach Anspruch 3, wobei der Radius r des zweiten Kreisbogens im wesentlichen gleich dem 15fachen der Dicke der Bleche (t1-t4) ist.

5. Rohrförmige, schmale, umschlossene Struktur nach einem der vorangehenden Ansprüche 2 bis 4, umfassend zwei rohrförmige Ausgangsabschnitte (12), die im wesentlichen im rechten Winkel in Bezug auf den rohrförmigen Eingangsabschnitt (10) angeordnet und ausgerichtet sind, wobei der unabhängige kontinuierliche Durchgang (24), der den rohrförmigen Eingangsabschnitt (10) mit jedem rohrförmigen Ausgangsabschnitt (12) verbindet, zwischen der Außenwand (14) und den beiden kontinuierlichen Innenwänden (22) festgelegt ist.

6. Rohrförmige, schmale, umschlossene Struktur nach Anspruch 5, wobei eine zusätzliche Innenwand (26) im Innern der Struktur entlang einer Mittenebene derselben zwischen der Außenwand (14) der Struktur und Verbindungszonen der kontinuierlichen Innenwände(22) angeordnet ist.

7. Rohrförmige, schmale, umschlossene Struktur nach Anspruch 5, wobei die beiden anderen Paare von Innenwänden (26') Verbindungszonen der kontinuierlichen Innenwände (22) mit der Außenwand der Struktur verbinden, und zwar so, dass das über andere Durchgänge (28) ins Innere der Außenwand eingetretene Fluid am Ausgang rekanalisiert wird.

8. Rohrförmige, schmale, umschlossene Struktur nach einem der vorangehenden Ansprüche, wobei jede der unabhängigen kontinuierlichen Durchgänge (24) einen im wesentlichen konstanten Durchgangsquerschnitt zwischen dem rohrförmigen Eingangsabschnitt (10) und jedem rohrförmigen Ausgangsabschnitt (12) aufweist.

9. Rohrförmige, schmale, umschlossene Struktur nach einem der Ansprüche 5 bis 7, wobei jeder der unabhängigen kontinuierlichen Durchgänge (24) einen Durchgangsquerschnitt aufweist, der sich zwischen dem rohrförmigen Eingangsabschnitt (10) und jedem rohrförmigen Ausgangsabschnitt (12) immer mehr verringert.

10. Rohrförmige, schmale, umschlossene Struktur nach einem der Ansprüche 5 bis 7, wobei jeder der unabhängigen kontinuierlichen Durchgänge (24) einen Durchgangsquerschnitt aufweist, der zwischen dem rohrförmigen Eingangsabschnitt (10) und jedem der rohrförmigen Ausgangsabschnitte (12) immmer mehr zunimmt.

11. Herstellungsverfahren einer rohrförmigen, schmalen, umschlossenen Struktur gemäß einem der vorangehenden Ansprüche, wobei die Außenwand (14) und die kontinuierlichen Innenwände (22) aus einem einzigen Arbeitsgang durch Diffusionsschweißen und durch superplastisches Formen aus Blechen (t1 bis t4) aus Titanlegierung erhalten werden.
